# FASCICULE DE BREVET EUROPEEN

(11) **EP 2 889 222 B1**
(45) Date de publication et mention de la délivrance du brevet: **29.08.2018**
(21) Numéro de dépôt: 14198996.2
(22) Date de dépôt: 18.12.2014
(51) Int. Cl.: B64F 5/10, B64C 1/18

(54) **Plancher provisoire pour cabine d'avion, utilisé pendant la construction de l'avion, et dalle composant ce plancher**
Provisorischer Boden für Flugzeugkabine, der während des Baus des Flugzeugs verwendet wird, und Bodenplatte, aus der dieser Boden besteht
Temporary floor for an aircraft cabin, used during the construction of the aircraft, and slab making up said floor

(30) Priorité: 31.12.2013 FR 1363760
(43) Date de publication de la demande: 01.07.2015
(73) Titulaire: AIRBUS OPERATIONS (S.A.S), 31060 Toulouse (FR)
(72) Inventeur: Menard, Christophe, 44117 SAINT ANDRE DES EAUX (FR); Joneau, Amandine, 44530 DREFFEAC (FR)
(74) Mandataire: Gicquel, Olivier Yves Gérard

(56) Documents cités:
- EP-A1- 1 467 043
- EP-A2- 2 522 573
- EP-A2- 2 532 589
- WO-A1-2013/190400
- CA-C- 2 225 988
- US-A- 4 850 162
- US-A1- 2010 300 023
- US-A1- 2012 304 579

## Description

La présente invention concerne un plancher temporaire destiné en utilisation à être installé dans une cabine d'avion pendant la construction de l'avion, et une dalle composant ce plancher.

Quand un avion est construit, les éléments de fuselage sont amenés à un site de pré-assemblage, où ils sont assemblés sous forme de tronçons, puis équipés en systèmes électriques, hydrauliques, etc. Les tronçons du fuselage sont équipés des rails définitifs, parmi lesquels on peut citer les rails de sièges et les rails hôtesses.

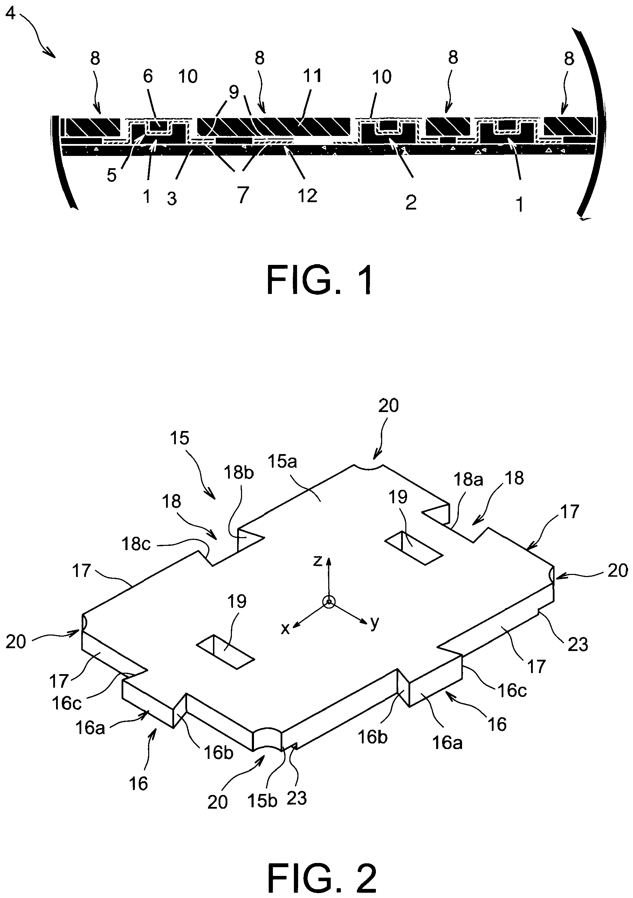

Un plancher provisoire est installé sur ces rails pour permettre aux opérateurs de se déplacer à l'intérieur du fuselage. L'agencement classique est représenté à la figure 1, qui est une représentation partielle du plancher temporaire, en coupe transversale. Le plancher provisoire est installé sensiblement au centre du fuselage et définit une zone de travail inférieure (au-dessous du plancher provisoire) et une zone de travail supérieure (au-dessus du plancher provisoire). On a illustré deux rails de siège 1 et un rail hôtesse 2, fixés sur des raidisseurs 3 transversaux, s'étendant d'une paroi à l'autre du fuselage 4. Les rails de siège 1 et 2 comprennent une portion centrale surélevée 5, présentant une rainure centrale 6, et des portions plates appelées oreilles 7, s'étendant horizontalement de part et d'autre de la partie centrale surélevée 5 et posées sur les raidisseurs 3. Les dimensions des rails peuvent être différentes d'un rail à l'autre et certains d'entre eux sont ponctuellement interrompus le long du fuselage 4, par exemple pour prévoir l'espace nécessaire à l'installation d'équipements disposés ultérieurement dans l'avion.

Le plancher provisoire classique consiste en des planches 8, posées sur deux oreilles 7 opposées de deux rails de siège 1 ou 2 voisins. Les oreilles 7 sont préalablement couvertes de bandes adhésives 9 pour les protéger du contact avec les planches. Des dispositifs de protection analogues peuvent être prévus sur les portions centrales surélevées 5, mais on préfère les protéger plutôt par des capots en caoutchouc 10 possédant des flancs 11, qui offrent ainsi une protection latérale aux portions centrales surélevées 5. Des rails provisoires 12, appelés "faux rails" sont disposés entres deux portions de rails de siège 1 et/ou de rails hôtesses 2 définitifs, aux endroits du plancher provisoire où les rails de siège 1 et/ou les rails hôtesses 2 sont éloignés les uns des autres, afin de mieux soutenir les planches 8 ; ils sont eux aussi recouverts de bandes adhésives 9.

Le document EP2522573 décrit un plancher provisoire reconfigurable pour un aéronef comprenant un ensemble de dalles présentant des côtés extérieurs adaptés aux rails et prévues pour s'assembler les unes avec les autres. Ces dalles sont équipées de moyens de verrouillage pour améliorer la stabilité de l'assemblage et de moyens de manipulation pour faciliter l'installation et la désinstallation. Les dalles de ce plancher provisoire peuvent être de formes différentes (conique, trapézoïdale, carrée) selon l'endroit où elles sont prévues d'être installées.

La mise en place du plancher est compliquée, de nombreux modèles de planches 8 devant être prévus pour s'adapter aux différents espaces entre les rails de siège 1 et 2, variables d'un modèle d'avion à l'autre. La mise en place peut être longue et accroît ainsi les risques d'accidents pour les opérateurs qui travaillent au-dessus du sol. Toutes les surfaces des rails doivent être protégées contre les contacts avec les planches 8 et les opérateurs. La surface supérieure, sur laquelle les opérateurs travaillent, n'est pas uniforme, puisque les rails de siège 1 et les rails hôtesses 2 ont généralement des hauteurs différentes. Les jonctions des planches 8 entre elles et au niveau des rails de siège 1 et/ou des rails hôtesse 2 créent des interstices qui déséquilibrent les opérateurs, et augmentent le risque de chutes de petits objets pendant les opérations d'assemblage.

Sous une forme générale, l'invention est relative à une dalle de plancher provisoire, s'étendant dans un plan et limitée par une face supérieure, une face inférieure et un bord extérieur, caractérisée en ce que le bord extérieur comprend des côtés opposés, et les côtés opposés sont porteurs de reliefs de formes complémentaires s'étendant dans le plan de la dalle, l'un des reliefs étant une saillie s'élargissant extérieurement au bord, et l'autre des reliefs étant un logement s'élargissant intérieurement au bord.

Cette dalle a la faculté de s'assembler à des dalles analogues pour donner un plancher provisoire continu posé sur les rails de la cabine, en imbriquant les saillies dans les logements de côtés en vis-à-vis de dalles adjacents. Les dalles peuvent être toutes semblables ou du moins utilisées en un petit nombre de modèles différents, ce qui rend l'assemblage du plancher rapide et facile. L'imbrication des saillies dans les logements permet de juxtaposer les dalles avec précision, les jeux entre elles étant très réduits, tout en donnant une bonne cohésion au plancher. Les risques d'accidents des opérateurs ou de chutes de petits objets à travers le plancher sont fort réduits.

Une forme simple et régulière de construction de la dalle est rectangulaire : elle comprend alors deux paires des côtés opposés, les côtés étant rectilignes hors des reliefs et les côtés des paires étant parallèles.

L'assemblage du plancher et le remplacement de certaines dalles sont facilités si le bord extérieur est en dépouille de la face supérieure à la face inférieure, puisque les dalles peuvent être associées au reste du plancher par de simples mouvements de descente, en l'abordant l'ouverture du reste du plancher par leur face inférieure, dont la superficie est plus petite.

L'assemblage et l'extraction des dalles sont encore rendues faciles si les dalles comprennent au moins une ouverture s'ouvrant sur la face supérieure, et dans lesquelles des outils de préhension adaptés peuvent entrer pour tenir les dalles et permettre de les déplacer avec précision, et les extraire sans effort quand elles doivent être démontées du plancher. Les ouvertures, de même que les outils, peuvent prendre plusieurs formes différentes dont certaines seront complètement décrites ensuite. L'invention est donc, telle que complètement définie dans la revendication 1, un plancher provisoire utilisé pendant une construction de cabine d'aéronef, composé d'une pluralité de dalles selon ce qui précède en formant une surface continue, et en ce qu'il est posé sur des rails de la cabine, les dalles étant juxtaposées et les saillies étant imbriquées dans les logements.

Ces aspects et caractéristiques de l'invention, ainsi que d'autres, seront maintenant décrits plus en détail au moyen des figures suivantes :
- La figure 1 déjà décrite est une vue en coupe transversale d'un plancher connu ;
- la figure 2 est une vue d'une dalle de plancher conforme à l'invention ;
- les figures 3a et 3b sont des vues d'un détail d'une dalle de plancher conforme à l'invention ;
- la figure 4a est une vue en coupe de dalles assemblées;
- la figure 4b est un agrandissement d'un détail de la figure 4a, à un assemblage de dalles ;
- la figure 4c est une vue en coupe de l'assemblage ;
- les figures 5a, 5b et 5c sont des vues d'outils de préhension du plancher selon l'invention ;
- la figure 6a est une vue d'un rail de substitution pouvant être utilisé dans le plancher provisoire selon l'invention ;
- la figure 6b est une vue d'un rail de compensation pouvant être utilisé dans le plancher provisoire selon l'invention ;
- la figure 7 illustre le plancher de l'invention en coupe transversale ;
- et la figure 8 est une coupe d'un ruban de caoutchouc pouvant être utilisé avec le plancher selon l'invention.

La figure 2 représente une dalle 15 utilisée pour composer le plancher provisoire de l'invention. Elle est de forme générale rectangulaire et présente une face supérieure 15a, une face inférieure 15b, opposée à la face supérieure 15a, et quatre faces de côté 17 opposés par paires et composant un bord extérieur. Pour la suite de la description, on définit la face supérieure 15a comme étant la face sur laquelle les opérateurs vont se déplacer lorsque le plancher provisoire de l'invention sera assemblé dans le fuselage, et les faces de côté 17 seront nommées "côtés" 17. Les côtés 17 sont rectilignes et les côtés opposés des paires sont parallèles, hormis à des reliefs qu'on va maintenant décrire.

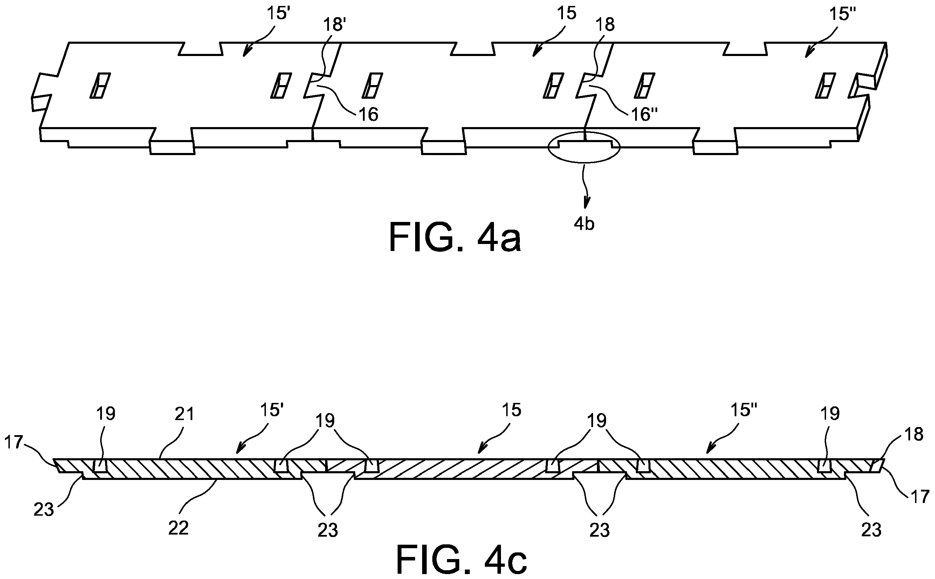

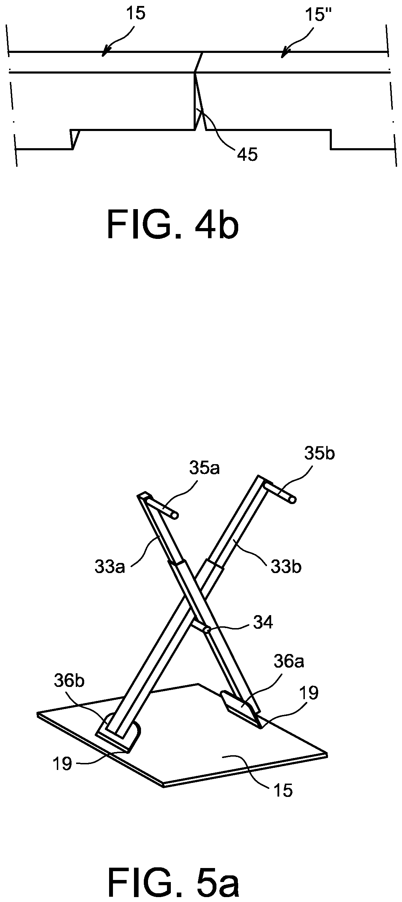

Deux des quatre côtés 17 de la dalle 15 comprennent à leur centre un relief formant une saillie 16 de forme trapézoïdale, de même épaisseur que la dalle 15, s'élargissant hors de la dalle 15 à partir du côté 17 de la dalle 15, et les deux autres côtés 17, respectivement opposés aux précédents, comprennent un relief de forme complémentaire de la saillie 16, qui est un logement 18 à section trapézoïdale, s'élargissant vers l'intérieur de la dalle 15 à partir du côté 17. Les reliefs s'étendant dans le plan de la dalle 15. Que ce soient les saillies 16 ou les logements 18, ils comprennent trois faces de contact, notées respectivement 16a, 16b, 16c pour les saillies 16 et 18a, 18b, 18c pour les logements 18. Les côtés 17, y compris les faces de contact 16a-c et 18a-c, des saillies 16 et des logements 18 se présentent en dépouille de la face supérieure 15a à la face inférieure 15b, comme illustré sur la figure 4b, c'est-à-dire qu'ils sont inclinés sur toute l'épaisseur de la dalle 15, en donnant à la dalle 15 une superficie plus petite à la face inférieure 15b. Ainsi, les saillies 16 s'évasent depuis la face inférieure 15b jusqu'à la face supérieure 15a d'une dalle 15. Les saillies 16 et logements 18 de dalles 15 adjacentes constituent des parties mâles et femelles d'assemblage des dalles 15 par imbrication.

Deux ouvertures 19 sont prévues s'ouvrant sur la face supérieure 15a d'une dalle 15 pour manipuler la dalle 15 ou insérer des outils de manipulation de la dalle 15. Les ouvertures 19 ont des formes et des dimensions sensiblement identiques l'une de l'autre et sont situées sensiblement au centre des dalles 15. La distance entre les deux ouvertures 19 est sensiblement identique d'une dalle 15 à l'autre afin de standardiser les outils de préhension et de manutention des dalles 15.

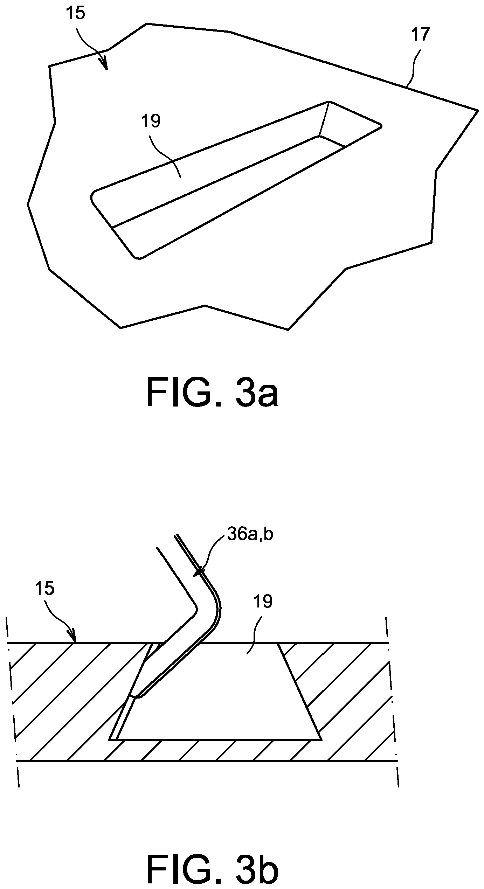

Dans un premier mode de réalisation de la dalle 15, les ouvertures 19 sont non traversantes et présentent une forme allongée, rectangulaire, aux coins arrondis en vue de dessus, telle qu'illustrée sur la figure 3a et une forme en queue d'aronde à bords latéraux en surplomb, les ouvertures 19 s'élargissant alors vers la face inférieure 15b, en vue en coupe, telle qu'illustrée sur la figure 3b. L'orientation des ouvertures 19 sur la face supérieure 15a de la dalle 15 est identique et telle que la longueur de l'ouverture 19 est sensiblement parallèle à la largeur de la dalle 15. Dans ce premier mode de réalisation, la surface inférieure 15b de la dalle 15 est recouverte d'un revêtement antidérapant.

Dans un deuxième mode de réalisation de la dalle 15, les ouvertures 19 sont traversantes, de forme cylindrique et obturées sur la face inférieure 15b de la dalle 15 par une paroi en caoutchouc (non représentée), avantageusement entaillée en croix. La paroi en caoutchouc agit comme revêtement antidérapant.

Dans une variante de réalisation de la dalle 15, des ouvertures 20, en arc de cercle, sont présentes aux coins de la dalle 15. Ces ouvertures 20 sont traversantes.

La face supérieure 15a des dalles 15 est avantageusement couverte d'un revêtement antibruit et/ou antidérapant 21 (figure 4c), puisque les opérateurs se déplacent sur cette face. Selon l'invention la face inférieure 15b est couverte d'un revêtement 22 (figure 4a) réfléchissant la lumière et éventuellement amortissant et/ou antidéparant. Le revêtement 22 permet notamment d'améliorer l'environnement de travail des opérateurs, lorsque des opérations d'assemblage sont menées au niveau inférieur de la cabine, sous le plancher provisoire. La face supérieure des dalles 15 est avantageusement plane, mais la face inférieure comporte deux épaulements rentrants 23 s'étendant sur la face inférieure 15b depuis deux cotés 17 opposés l'un de l'autre ; les dalles 15, pourvues des épaulements 23, ont donc une épaisseur variable, généralement plus importante au centre.

On a illustré aux figures 4a, 4b et 4c, en perspective et avec une coupe selon un plan médian de la dalle 15 et parallèle aux côtés 17, l'imbrication d'une dalle 15 avec deux dalles adjacentes 15'et 15" assemblées sur deux côtés 17 opposés de la dalle 15. Chaque face de contact 16a-c d'une saillie 16 de la dalle 15 recouvre une face de contact 18'a-c du logement 18' de la dalle adjacente (15'). De même, chaque face de contact 18 a-c d'un logement 18 de la dalle 15 est recouverte par une face de contact 16"a-c d'une saillie 16" de la dalle 15". Ainsi chaque dalle 15 peut être assemblée à une dalle déjà installée par un simple mouvement de dépose sur la dalle 15', 15" déjà installée. L'obliquité des faces de contact 16a-c et 18a-c et la dépouille des côtés 17 vers la face inférieure 15b facilite l'insertion et l'extraction des dalles 15 par des mouvements verticaux, tout en donnant une bonne cohésion à l'assemblage des dalles 15, grâce à l'imbrication des saillies 16 dans les logements 18.

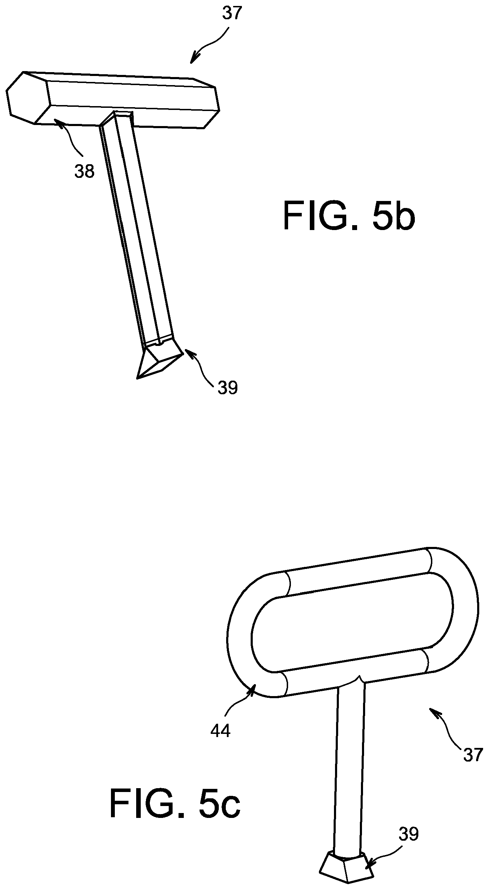

Les ouvertures 19 sont destinées à insérer un outil de préhension tel que, par exemple, l'outil 33 illustré à la figure 5a ou l'outil 37 illustré aux figures 5b et 5c.

L'outil de préhension 33 est une pince croisée en forme de X composée de deux branches 33a, 33b reliées par un axe cylindrique 34 pour permettre l'articulation des deux branches 33a et 33b. Chacune des deux branches 33a, 33b comprend à une de ses extrémités une poignée 35a, 35b et à l'autre extrémité une platine 36a, 36b, les platines 36a, 36b étant incurvées dans des sens opposés dans la direction d'ouverture et de fermeture de la pince, de sorte à s'insérer dans les ouvertures 19 afin de pincer et pouvoir manipuler la dalle 15, en touchant les bords en surplomb des ouvertures (figure 3b). Les deux branches 33a et 33b sont également équipées de pions d'indexation 43a et 43b qui permettent d'en régler leur longueur, afin de s'adapter aux besoins (taille de l'opérateur, hauteur de la manutention, etc.)

L'outil de préhension 37, illustré à la figure 5b, présente sensiblement une forme de T dont la barre supérieure est soit un cylindre facetté 38 servant de poignée comme illustré à la figure 5b, soit un ovale 44 comme illustré à la figure 5c. L'extrémité libre 39 de l'outil 37 a une forme pyramidale de base rectangulaire et dont l'une des dimensions de la base est sensiblement identique à la plus petite dimension des ouvertures 19. Ainsi l'extrémité libre 39 peut s'insérer dans une ouverture 19 de la dalle 15, et une rotation de 90° génère une force de contact solidarisant l'outil de préhension 37 et la dalle 15, permettant ainsi la manipulation de cette dernière.

Dans le second mode de réalisation de la dalle 15 décrit, l'entaille dans la paroi en caoutchouc permet l'insertion d'un outil de manipulation (non représenté) en forme de L dont la base est de dimension inférieure à la plus grande des dimensions de l'entaille. Après insertion dans l'entaille, la base de l'outil de manipulation peut être plaquée sur la face inférieure 15b pour soulever la dalle 15.

Les ouvertures 19 permettent la manipulation des dalles 15 afin de les assembler et de constituer le plancher provisoire selon l'invention.

Le plancher provisoire peut comprendre des rails amovibles, par exemple des rails de substitution 26, ayant la même section que les rails de siège 1 ou les rails hôtesses 2, selon le cas, et qui servent à compléter les rails déjà présents lorsque ces rails de permettent pas l'installation des dalles 15.

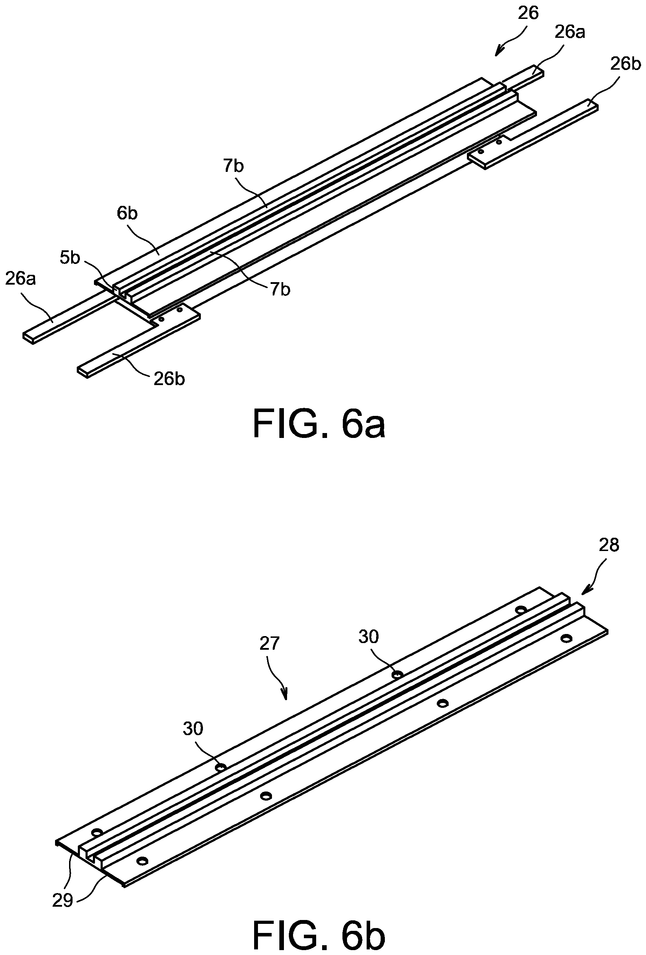

On a illustré à la figure 6a des rails de substitution 26. Ces rails ont une section identique à la section de rails de siège 1 et présentent une partie centrale 5b comprenant une rainure centrale 6b et deux oreillettes 7b de part et d'autre de la section centrale 5b. Chaque extrémité d'un rail de substitution 26 comprend une paire de bras 26a, 26b disposés en U et destinés à accoupler les rails de substitution 26 avec les rails de siège 1 préalablement à l'installation des dalles 15. Dans la suite de la description, les rails de substitution 26 sont confondus avec les rails de siège 1.

Le plancher provisoire selon l'invention comprend également des rails de compensation 28, illustrés à la figure 6b. Ces rails de compensation 28, réalisés par exemple avec une imprimante 3D, présentent une section similaire à la section des rails de siège 1 et peuvent être utilisés en recouvrement de rails hôtesses 2 dont un espacement est trop important. Dans la suite de la description, les rails de compensation 28 sont confondus avec les rails hôtesses 2.

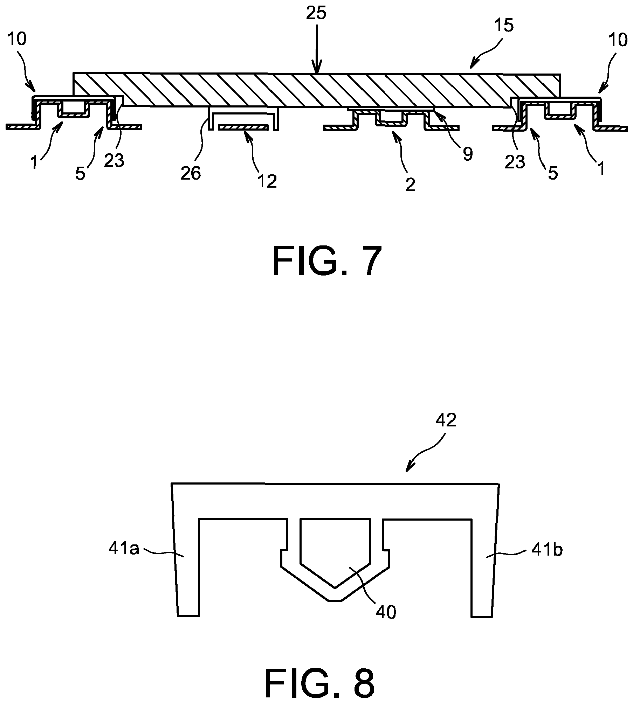

Une vue en coupe transversale d'un plancher provisoire selon l'invention posé sur les rails de siège 1 et les rails hôtesses 2 est présentée sur la figure 7.

Dans un mode de réalisation du plancher provisoire selon l'invention, les rails de siège 1 sont protégés par des capots en caoutchouc 10 et/ou des bandes adhésives 9 et les rails hôtesses 2 sont protégés par des bandes adhésives 9 uniquement.

Les dalles 15 sont posées entre deux rails de sièges 1, sur les portions centrales surélevées 5 des rails de siège 1, les épaulements 23 venant face aux flancs desdites portions centrales 5. Les dalles 15 viennent recouvrir complètement les rails hôtesses 2 qui sont situés sous la dalle 15 sensiblement au centre de celle-ci.

Le plancher provisoire selon l'invention comprend également un ruban 39 (représenté en figure 8), en matériau caoutchouc, de forme complémentaire aux rails de siège 1 et comportant notamment une protubérance 40, de forme sensiblement triangulaire, destinée à être insérée dans la rainure centrale 6 des rails de siège 1. Le ruban en caoutchouc 39 comprend également des parois 41a et 41b, disposée du même côté que la protubérance 40 et destinées à recouvrir la partie centrale 5 des rails de siège 1 et des rails hôtesses 2 dans un autre mode de réalisation du plancher provisoire selon l'invention, supprimant ainsi l'utilisation des capots en caoutchouc 10 et des bandes adhésives 9.

## Revendications

1. Plancher provisoire utilisé pendant une construction de cabine d'aéronef comprenant une zone de travail supérieure et une zone de travail inférieure délimitées par ledit plancher provisoire, le plancher étant composé d'une pluralité de dalles (15) s'étendant dans un plan et limitées par une face supérieure (15a), une face inférieure (15b) et un bord extérieur, les dalles (15) étant juxtaposées en formant une surface continue, quand posées sur des rails (1, 2) de la cabine, le bord extérieur des dalles (15) comprenant des côtés (17) opposés, porteurs de reliefs (16, 18) de formes complémentaires s'étendant dans le plan de la dalle (15), certains des reliefs étant des saillies (16) s'élargissant extérieurement au bord, et d'autres des reliefs étant des logements s'élargissant intérieurement au bord, et les saillies sont imbriquées dans les logements des dalles (15) voisines, le plancher étant **caractérisé en ce que** les reliefs s'étendant de la face supérieure (15a) à la face inférieure (15b) des dalles (15), **en ce que** le bord extérieur des dalles (15) est en dépouille de la face supérieure (15a) à la face inférieure (15b) et **en ce que** la face inférieure (15b) des dalles (15) comporte un revêtement (22) réfléchissant la lumière.

2. Plancher provisoire selon la revendication 1, **caractérisé en ce que** certaines des dalles (15) au moins comprennent au moins un épaulement (23) correspondant à une variation d'épaisseur desdites dalles (15), certains au moins des rails (1) étant face à face avec les épaulements (23) quand les dalles sont posées sur les rails (1, 2).

3. Plancher provisoire selon l'une quelconque des revendications 1 ou 2 **caractérisé en ce qu'**il comprend des rails amovibles et provisoires (26) pour prolonger les rails de la cabine à des interruptions desdits rails de la cabine.

4. Plancher provisoire selon l'une quelconque des revendications 1 à 3, **caractérisé en ce qu'**il comprend des capots en caoutchouc (10), des rubans en caoutchouc (39) et/ou des bandes adhésives (9) pour couvrir les rails (1, 2).

5. Plancher provisoire selon l'une quelconque des revendications 1 à 4, **caractérisé en ce que** les dalles (15) comprennent au moins une ouverture (19, 20) s'ouvrant sur la face supérieure (15a) et destinée à y insérer un outil de préhension des dalles.

6. Plancher provisoire selon la revendication 5, **caractérisé en ce que** soit l'ouverture s'élargit vers la face inférieure, soit s'ouvre aussi sur la face inférieure.

7. Plancher provisoire selon l'une quelconque des revendications 1 à 6, **caractérisé en ce que** la face supérieure des dalles (15) comporte un revêtement (21) amortissant et/ou antidérapant.

8. Plancher provisoire selon l'une quelconque des revendications là 7, **caractérisé en ce que** la face inférieure des dalles (15) comprend un revêtement (22) amortissant et/ou antidérapant.

9. Aéronef **caractérisé en ce qu'**il comprend un plancher provisoire selon l'une des revendications 1 à 8.

## Patentansprüche

1. Provisorischer Boden, der während eines Baus einer Luftfahrzeugkabine verwendet wird, die einen oberen Arbeitsbereich und einen unteren Arbeitsbereich umfasst, die durch den provisorischen Boden abgegrenzt werden, wobei der Boden aus mehreren Bodenplatten (15) besteht, die sich in einer Ebene erstrecken und von einer Oberseite (15a), einer Unterseite (15b) und einem Außenrand begrenzt werden, wobei die Bodenplatten (15) nebeneinander angeordnet sind und dabei eine durchgehende Fläche bilden, wenn sie auf Schienen (1, 2) der Kabine aufgelegt sind, wobei der Außenrand der Bodenplatten (15) gegenüberliegende Seiten (17) umfasst, die Reliefs (16, 18) von komplementären Formen tragen, die sich in der Ebene der Bodenplatte (15) erstrecken, wobei einige der Reliefs Vorsprünge (16) sind, die sich außerhalb des Randes verbreitern, und andere der Reliefs Aufnahmen sind, die sich innerhalb des Randes verbreitern, und die Vorsprünge in die Aufnahmen der benachbarten Bodenplatten (15) eingerastet sind, wobei der Boden **dadurch gekennzeichnet ist, dass** sich die Reliefs von der Oberseite (15a) bis zur Unterseite (15b) der Bodenplatten (15) erstrecken, dadurch, dass der Außenrand der Bodenplatten (15) von der Oberseite (15a) zur Unterseite (15b) hin hinterschnitten ist, und dadurch, dass die Unterseite (15b) der Bodenplatten (15) eine Licht reflektierende Beschichtung (22) aufweist.

2. Provisorischer Boden nach Anspruch 1, **dadurch gekennzeichnet, dass** wenigstens einige der Bodenplatten (15) wenigstens einen Absatz (23) umfassen, der einer Dickenänderung der Bodenplatten (15) entspricht, wobei sich wenigstens einige der Schienen (1) gegenüber den Absätzen (23) befinden, wenn die Bodenplatten auf die Schienen (1, 2) aufgelegt sind.

3. Provisorischer Boden nach einem der Ansprüche 1 oder 2, **dadurch gekennzeichnet, dass** er demontierbare und provisorische Schienen (26) umfasst, um die Schienen der Kabine bei Unterbrechungen der Schienen der Kabine zu verlängern.

4. Provisorischer Boden nach einem der Ansprüche 1 bis 3, **dadurch gekennzeichnet, dass** er Gummihauben (10), Gummistreifen (39) und/oder Klebebänder (9) umfasst, um die Schienen (1, 2) zu bedecken.

5. Provisorischer Boden nach einem der Ansprüche 1 bis 4, **dadurch gekennzeichnet, dass** die Bodenplatten (15) wenigstens eine Öffnung (19, 20) umfassen, die sich zur Oberseite (15a) öffnet und dazu bestimmt ist, ein Werkzeug zum Greifen der Bodenplatten in sie einzuführen.

6. Provisorischer Boden nach Anspruch 5, **dadurch gekennzeichnet, dass** sich die Öffnung entweder in Richtung der Unterseite erweitert oder sich auch zur Unterseite öffnet.

7. Provisorischer Boden nach einem der Ansprüche 1 bis 6, **dadurch gekennzeichnet, dass** die Oberseite der Bodenplatten (15) eine dämpfende und/oder rutschhemmende Beschichtung (21) aufweist.

8. Provisorischer Boden nach einem der Ansprüche 1 bis 7, **dadurch gekennzeichnet, dass** die Unterseite der Bodenplatten (15) eine dämpfende und/oder rutschhemmende Beschichtung (22) aufweist.

9. Luftfahrzeug, **dadurch gekennzeichnet, dass** es einen provisorischen Boden nach einem der Ansprüche 1 bis 8 umfasst.

## Claims

1. Temporary floor used during the building of an aircraft cabin, comprising an upper work zone and a lower work zone which are delineated by the said temporary floor, the floor being made up of a plurality of slabs (15) extending in a plane and bounded by an upper face (15a), a lower face (15b) and an outer edge, the slabs (15) being juxtaposed to form a continuous surface, when placed on rails (1, 2) of the cabin, the outer edge of the slabs (15) comprising opposite sides (17) bearing reliefs (16, 18) of complementing shapes extending in the plane of the slab (15), some of the reliefs being projections (16) widening externally at the edge, and others of the reliefs being housings widening internally at the edge, and the projections are embrocated in the housings of the adjacent slabs (15), the floor being **characterized in that** the reliefs extending from the upper face (15a) to the lower face (15b) of the slabs (15), **in that** the outer edge of the slabs (15) is undercut from the upper face (15a) to the lower face (15b) and **in that** the lower face (15b) of the slabs (15) comprises a light-reflecting coating (22).

2. Temporary floor according to Claim 1, **characterized in that** at least some of the slabs (15) comprise at least one shoulder (23) corresponding to a variation in thickness of the said slabs (15), at least some of the rails (1) being face-to-face with the shoulders (23) when the slabs are placed on the rails (1, 2).

3. Temporary floor according to either one of Claims 1 and 2, **characterized in that** it comprises removable and temporary rails (26) to extend the rails of the cabin where the said cabin rails are interrupted.

4. Temporary floor according to any one of Claims 1 to 3, **characterized in that** it comprises rubber caps (10), rubber strips (39) and/or adhesive tapes (9) to cover the rails (1, 2).

5. Temporary floor according to any one of Claims 1 to 4, **characterized in that** the slabs (15) comprise at least one opening (19, 20) opening onto the upper face (15a) and intended to have a slab-grasping tool inserted into it.

6. Temporary floor according to Claim 5, **characterized in that** either the opening widens towards the lower face or it also opens onto the lower face.

7. Temporary floor according to any one of Claims 1 to 6, **characterized in that** the upper face of the slabs (15) comprises a shock-absorbing and/or non-slip covering (21).

8. Temporary floor according to any one of Claims 1 to 7, **characterized in that** the lower face of the slabs (15) comprises a shock-absorbing and/or non-slip covering (22).

9. Aircraft **characterized in that** it comprises a temporary floor according to one of Claims 1 to 8.
